# EUROPÄISCHE PATENTSCHRIFT

(11) **EP 1 851 027 B1**
(45) Veröffentlichungstag und Bekanntmachung des Hinweises auf die Patenterteilung: **13.06.2012**
(21) Anmeldenummer: 05807856.9
(22) Anmeldetag: 10.11.2005
(51) Int. Cl.: B29C 43/24, B29C 43/58, H02P 5/46, D21G 1/00, B29C 55/06

(54) **Vorrichtung und Verfahren zum Antrieb einer Vorheizwalzenanordnung in einer Kalander-Vorrichtung**
Device and method for driving a preheating roll assembly in a calender unit
Dispositif et procede pour entrainer un ensemble cylindre de prechauffage dans un dispositif de calandrage

(30) Priorität: 16.12.2004 DE 202004019456 U
(43) Veröffentlichungstag der Anmeldung: 07.11.2007
(73) Patentinhaber: Brückner Maschinenbau GmbH, 83313 Siegsdorf (DE)
(72) Erfinder: OEDL, Günter, A-5020 Salzburg (AT)
(74) Vertreter: Flach, Dieter Rolf Paul
(86) Internationale Anmeldenummer: PCT/EP2005/012064
(87) Internationale Veröffentlichungsnummer: WO 2006/063641

(56) Entgegenhaltungen:
- EP-A- 0 875 359
- WO-A-97/46368
- DE-A1- 2 055 456
- DE-A1- 2 453 443
- DE-A1- 2 931 198
- US-A- 5 151 024
- US-A1- 2001 012 548

## Beschreibung

Die Erfindung betrifft eine Vorrichtung zum Antrieb einer Vorheizwalzenanordnung in einer Anlage zur Herstellung von Folien sowie ein zugehöriges Verfahren zu deren Betrieb.

Bei der Herstellung von Kunststofffolien wird der aus einem Extruder kommende Folienfilm in der Regel zunächst über eine in einem Wasserbad drehende Kühlwalze abgekühlt. Anschließend wird der Film wieder mit einer sogenannten Vorheizwalzenanordnung auf eine Temperatur erwärmt, welche eine nachfolgende Verstreckung der Folie ermöglicht.

Das prozesstechnisch gewünschte Aufheizen der Folie durch die Vorheizwalzen führt zu einer Längenänderung, die wiederum eine Geschwindigkeitsabstufung der Vorheizwalzen erfordert. Diese wird gemäß dem Stand der Technik dadurch erreicht, dass die einzelnen Walzen von einem gemeinsamen Motor über Riemen angetrieben werden. Hierbei umfasst jede Walze eine Riemenscheibe, über die ein Riemen läuft, der durch den gemeinsamen Motor angetrieben wird. Durch entsprechende Abstufung der Durchmesser der Riemenscheiben erreicht man eine Geschwindigkeitsabstufung der Walzen. Es ist hierbei nachteilig, dass die einmal gewählte Abstufung nur einem Aufheizprofil entspricht. Bei anderen Prozessparametern wird eine andere Abstufung der Riemenscheiben benötigt, da es sonst zu starken Spannungen in der Folie (Voreilung zu hoch) oder zu einer Lockerung der Folie (Verzögerung) kommen würde. Zur Veränderung der Abstufung der Riemenscheiben müssen diese ausgewechselt werden, was mit einem sehr hohen Aufwand verbunden ist.

Zur Lösung dieses Problems könnte jeder Vorheizwalze ein Einzelantrieb zugeordnet werden. Hierdurch kann zwar in jedem Betriebsfall an den einzelnen Walzen die passende Rotationsgeschwindigkeit korrekt eingestellt werden, jedoch muss hierzu für jede Vorheizwalze ein separater Motor mit Geber und Umrichter vorgesehen sein. Ferner ist die Einstellung der Einzelmotoren für jeden Betriebsfall sehr aufwändig.

Die Druckschrift DE 30 26 129 A1 beschreibt eine Metallbandreckanlage mit einer Mehrzahl von ziehenden und rückhaltenden Walzen, wobei einige der Walzen von einem gemeinsamen Hauptantriebsmotor abgekoppelt werden können.

Eine Reckanlage mit einer Vorheizstufe ist beispielsweise auch aus der EP 0 875 359 A2 bekannt geworden. Diese Reckanlage umfasst eine Reckstufe, die jeweils drei versetzt zueinander angeordnete Walzen umfasst, nämlich eine Eingangsstufe mit drei Walzen, die mit niedriger Geschwindigkeit drehen, sowie eine nachfolgende Ausgangsstufe mit ebenfalls drei Walzen, die gegenüber den Walzen der Eingangsstufe mit höherer Geschwindigkeit rotieren. Zwischen den eingangsseitigen und ausgangsseitigen mit unterschiedlicher Geschwindigkeit drehenden Walzen wird ein so genannter Reck-Längsspalt erzeugt.

Zunächst durchläuft ein Kunststofffilm eine Vorheizstufe mit im gezeigten Ausführungsbeispiel drei aufeinander folgenden Vorheizrollen, mit denen der Film auf eine vorbestimmte Temperatur gebracht werden kann.

In der der Vorheizstufe nachgeordneten Längsreckstufe kann die Rotationsgeschwindigkeit der niedriger drehenden Eingangsrollen sowie die Rotationsgeschwindigkeit der am Austritt der Längsreckstufe vorgesehenen höher drehenden Walzen entsprechend eingestellt werden. Die Zugkräfte können dabei ebenfalls durch Lageveränderungen der Rollen eingestellt werden, indem die Zugwalzen beispielsweise quer zur Abzugrichtung des Films hoch bzw. herab sowie in Abzugsrichtung der Folie oder entgegengesetzt dazu verstellt werden. Für die Verstellung werden separate Antriebe sowie Servomotoren eingesetzt.

Nach der Vorheizstufe und der Längsreckzone kann dann nachfolgend auch noch eine Querreckzone vorgesehen sein.

Für die Steuerung der Drehgeschwindigkeit der Motoren in den Reckzonen kann ein Rotationsgeschwindigkeits-Steuerungsverfahren sowie ein proportionales Strom-Steuerungsverfahren sowie ein Gleichstrom-Spannungs-Steuerungsverfahren oder aber auch ein Frequenz-Synchronisations-Steuerungsverfahren oder dergleichen eingesetzt werden.

Eine Kunststofffolienherstellungsanlage mit einem Kalander mit einer Abzugseinrichtung ist auch aus der DE 24 53 443 A1 als bekannt zu entnehmen. Beschrieben wird eine Anlage, bei welcher ein Förderband kontinuierlich einen Kunststofffilm einer Kalander-Stufe zuführt. Von der letzten Kalanderwalze wird der fertig kalandrierte Film von einer Abzugseinrichtung abgenommen, deren Abzugswalzen eine höhere Umfangsgeschwindigkeit als die letzte Kalanderwalze 6 aufweisen, um eine dünne Folie in Längsrichtung zu recken. Mittels eines Folien-Dickenmessgerätes und einer vorgesehenen Kontrolleinrichtung kann aus dem ermittelten Messsignal bezüglich der Foliendichte ein Regelsignal für eine Regeleinrichtung erzeugt werden, welche auf die Antriebe der Abzugswalzen im Sinne einer Drehzahlerhöhung oder einer Drehzahlverminderung einwirkt, um also das Reckverhältnis zu ändern. Die Kalanderstufe mit mehreren unmittelbar aufeinander folgenden Kalanderwalzen werden während des gesamten Regelvorganges konstant in Rotation gehalten, also unabhängig davon, ob die Umfangsgeschwindigkeit der Abzugswalzen der Abzugseinrichtung (zur Reckung des Films in Längsrichtung) erhöht oder verringert werden.

Ein Verfahren und eine Vorrichtung zum gleichzeitigen Abwickeln einer Vielzahl von Fäden oder Drähten von Spulen in einem Spulengatter ist aus der DE 20 55 456 A zu entnehmen. Auch in diesem Falle wird die Vielzahl von Fäden oder Drähten zwischen die Walzen eines Kalanders eingezogen und mit Kautschuk oder ähnlichen plastischen Kunststoffen belegt. Zwei zusammenwirkende Kalanderwalzen dienen dabei dazu einen Faden oder einen Draht mit regelbarer Zugspannung abzuziehen.

Schließlich ist aus der WO 97/46368 A1 ein zumindest zweistufiges Verfahren zur Längsreckung von Kunststofffolien sowie eine danach hergestellte Kunststofffolie und eine zugehörige Vorrichtung als bekannt zu entnehmen.

Gemäß dieser Vorveröffentlichung sind beispielsweise drei Längsreckstufen aufeinander folgend vorgesehen, wobei den jeweiligen Reckwalzen vorgelagert Walzen eingesetzt werden können, die der Temperierung des nachfolgend zu reckenden Filmes dienen.

Dem gegenüber ist es Aufgabe der vorliegenden Erfindung ist es, eine Antriebsvorrichtung für eine Vorheizwalzenanordnung zu schaffen, welche zuverlässig arbeitet und einfach auf verschiedene Prozessparameter eingestellt werden kann, sowie ein zugehöriges Verfahren zu deren Betrieb.

Diese Aufgabe wird durch die unabhängigen Patentansprüche gelöst. Weiterbildungen der Erfindung sind in den abhängigen Ansprüchen definiert.

Im Unterschied zu bekannten Vorrichtungen umfasst die erfindungsgemäße Antriebsvorrichtung wenigstens einen Einzelantrieb und insbesondere zwei Einzelantriebe, nämlich für eine Eingangs- und eine Ausgangswalze, wobei vozugsweise alle oder zumindest die Hälfte der zwischen der Eingangs- und der Ausgangswalze liegende intermediären Walzen jeweils über einen Asynchronmotor verfügen. Jeder Asynchronmotor steuert die Oberflächengeschwindigkeit und das Drehmoment einer intermediären Walze, wobei ein oder mehr als ein Asynchronmeter, insbesondere alle Asynchronmotoren, über einen gemeinsamen Frequenzumrichter betrieben werden.

Durch den gemeinsamen Frequenzumrichter der Asynchronmotoren können die intermediären Walzen durch entsprechende Wahl der Umrichterfrequenz auf einfache Weise auf unterschiedliche Prozessparameter, insbesondere auf unterschiedliche Temperaturprofile und unterschiedliche Transportgeschwindigkeiten der Folie, eingestellt werden. Es müssen bei der Veränderung von Prozessparametern somit nicht mehr einzelne Riemenscheiben an den Vorheizwalzen ausgetauscht werden, wie es bei bekannten Vorheizwalzenanordnungen der Fall ist. Darüber hinaus kann auf die Verwendung von Einzelantrieben mit entsprechenden Gebern und Umrichtern für jede Vorheizwalze verzichtet werden.

In einer bevorzugten Ausführungsform der Erfindung ist die Frequenz des gemeinsamen Frequenzumrichters derart eingestellt, dass für ein vorgegebenes Temperaturprofil der Vorheizwalzenanordnung und eine erwünschte Transportgeschwindigkeit der Folie die Reibung der Vorheizwalzen und die Längung der Folie in der Vorheizwalzenanordnung ausgeglichen werden. Die Asynchronmotoren übernehmen somit die Aufgabe, die Reibung in den Lagern und den Speisköpfen der einzelnen intermediären Walzen zu kompensieren und die Längung der Folie auszugleichen

In einer bevorzugten Ausführungsform der Erfindung sind die Einzelantriebe zwei Direktantriebe, wobei ein Direktantrieb die Eingangswalze und der andere Direktantrieb die Ausgangswalze antreibt.

In einer weiteren Ausgestaltung der Erfindung sind die Asynchronmotoren zumindest teilweise Torquemotoren mit Hohlwelle. Vorzugsweise sind diese Torquemotoren direkt auf der Walzenwelle der intermediären Walzen montiert. Die Asynchronmotoren können jedoch zumindest teilweise auch IEC-Normmotoren (IEC = International Electrochemical Comission) sein. In diesem Fall sind die Asynchronmotoren vorzugsweise über einen Flansch und/oder über eine Konsole auf der Walzenwelle montiert.

Zum Ausgleich der Längung der Folie kann in einer bevorzugten Ausführungsform der Erfindung die Ausgangswalze im Betrieb mit einer höheren Oberflächengeschwindigkeit drehen als die Eingangswalze.

Neben dem soeben beschriebenen Antrieb betrifft die Erfindung ferner eine Vorheizwalzenanordnung, welche einen derartigen Antrieb umfasst. Darüber hinaus betrifft die Erfindung eine Vorrichtung zur Herstellung von Folie, welche eine Vorheizwalzenanordnung mit dem erfindungsgemäßen Antrieb umfasst.

Ausführungsbeispiele der Erfindung werden nachfolgend detailliert anhand der beigefügten Figuren beschrieben.

Es zeigen:
- Figur 1:: eine schematische Wiedergabe eines Walzenschemas einer Längsreckanlage, in der die erfindungsgemäße Antriebsvorrichtung eingesetzt werden kann;
- Figur 2:: ein Diagramm, welches beispielhaft eine Kennlinie eines in der Erfindung verwendeten Asynchronmotors zeigt;
- Figur 3:: ein Diagramm, welches beispielhaft die Kraftverteilung in einer Vorheizwalzenanordnung zeigt, deren Walzen mit der erfindungsgemäßen Antriebsvorrichtung angetrieben werden.

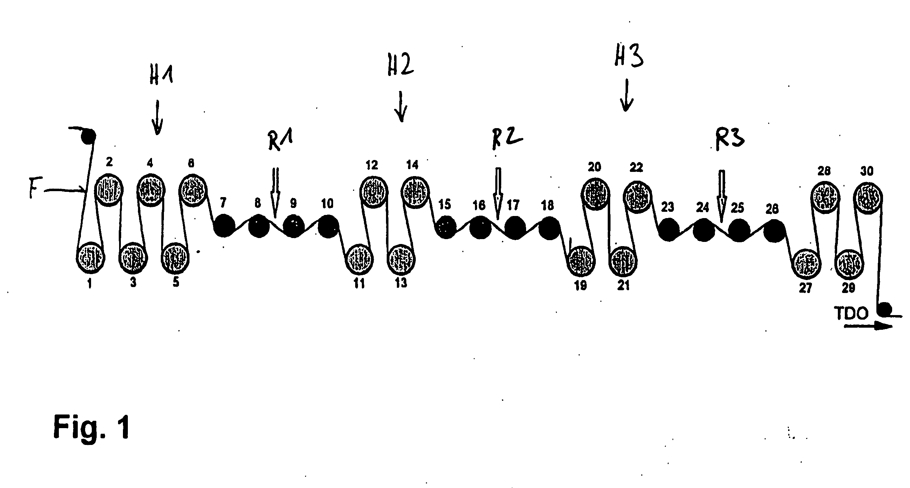

In Figur 1 ist in schematischer Seitendarstellung ein Anlagenschema einer dreistufigen Längsreckanlage gezeigt, wobei die einzelnen Walzen der Reckanlage mit Bezugszeichen 1 bis 30 durchnummeriert sind. In einer derartigen Anlage können Kunststofffolien hergestellt werden, welche insbesondere Polymermaterial, wie z.B. Polypropylen oder Polyester, umfassen.

Von einem Extruder kommend wird fließfähiges Kunststofffolienmaterial über eine Düse, in der Regel eine Breitschlitzdüse, und unter Zuhilfenahme eines sogenannten Luftmessers auf eine Kühlwalze übergeben, so dass der Schmelzfilm dann unter Hindurchführung durch ein Wasserbad gekühlt werden kann. Der plastifizierte Kühlfilm wird anschließend über mehrere Umlenkwalzen z.B. der in Figur 1 dargestellten Längsreckanlage zugeführt. Die durch die Längsreckanlage geführte Folienbahn wird nach dem Verlassen der Längsreckanlage in der Regel einer weiteren Reckanlage, nämlich einer sogenannten Querreckanlage (TDO) zur Durchführung einer nachfolgenden Querstreckung zugeführt. Anstelle der Querreckanlage oder auch der Längsreckanlage und der Querreckanlage ist es auch möglich, eine sogenannte Simultanreckanlage zu verwenden, bei der eine Längs- und Querreckung simultan erfolgt.

In der Längsreckanlage wird der Kunststofffilm F einer Vorheiz- oder Heizstufe H₁ zugeführt, die im gezeigten Ausführungsbeispiel Vorheizwalzen 1 bis 6 umfasst. In dieser Heiz- oder Vorheizstufe H₁ kann der Kunststofffilm F auf eine für die Verstreckung notwendige Temperatur erwärmt werden. Die Aufheizung kann dabei in bekannter Weise erfolgen, beispielsweise unter Verwendung entsprechender Vorheizkammern, innerhalb derer dem Film heiße Luft zugeführt und/oder der Film mit Infrarotstrahlen erwärmt oder durch Einsatz weiterer Maßnahmen auf das gewünschte Temperaturprofil gebracht wird. Dabei können auch einige oder alle zu dieser Vorheizstufe H₁ gehörenden Walzen 1 bis 6 mit einer integrierten Heizeinrichtung versehen werden, um den Film von der Walzenoberfläche her entsprechend dem Umschlingungswinkel der Folienbahn F an den Walzen aufzuheizen. Die Folienbahn F läuft anschließend durch die Walzen 7 bis 30, wobei eine Längsreckung im gezeigten Ausführungsbeispiel jeweils in den Reckspalten R1, R2 und R3 stattfindet. Auch die zwischen den einzelnen Reckzonen befindlichen und im gezeigten Ausführungsbeispiel einen größeren Durchmesser aufweisenden Walzen 11 bis 14 bzw. 19 bis 22 können ebenfalls wieder Teil einer Vorheiz- oder Heizstufe H₂ und/Oder H₃ sein, in welcher der Film ebenfalls wie in der Vorheizstufe H₁ auf ein bestimmtes Temperaturprofil gebracht werden soll.

Das prozesstechnisch erwünschte Aufheizen der Folie durch die Walzen 1 bis 6 führt zu einer Längenänderung der Folienbahn, weshalb die Eingangs- und Ausgangswalzen 1 und 6 jeweils durch einen Direktantrieb angetrieben werden, wobei die Geschwindigkeit des Direktantriebs der Ausgangswalze höher eingestellt wird als die Geschwindigkeit des Direktantriebs der Eingangswalze. Abweichend vom gezeigten Ausführungsbeispiel kann die Eingangswalze auch aus der Kühlwalze bestehen, auf der der Schmelzfilm aus einer Düse kommend durch das Wasserbad hindurchgeführt wird. Im Unterschied zur Eingangs- und Ausgangswalze verfügen die dazwischenliegenden Walzen 2 bis 5 jeweils über einen Asynchronmotor. Aufgabe dieser Asynchronmotoren ist es, die Reibung in den Lagern und Speisköpfen der Walzen 2 bis 5 zu kompensieren und ein gleichmäßiges Abrollen der Folienbahn über die Vorheizwalzen zu gewährleisten. Hierzu werden alle Asynchronmotoren von einem einzelnen Frequenzumrichter gemeinsam betrieben. Die Frequenz des Frequenzumrichters wird hierbei derart eingestellt, dass die Asynchronmotoren für ein vorgegebenes Temperaturprofil der Vorheizwalzen und eine erwünschte Transportgeschwindigkeit der Folienbahn die Reibung der Vorheizwalzen und die Längung der Folie ausgleichen.

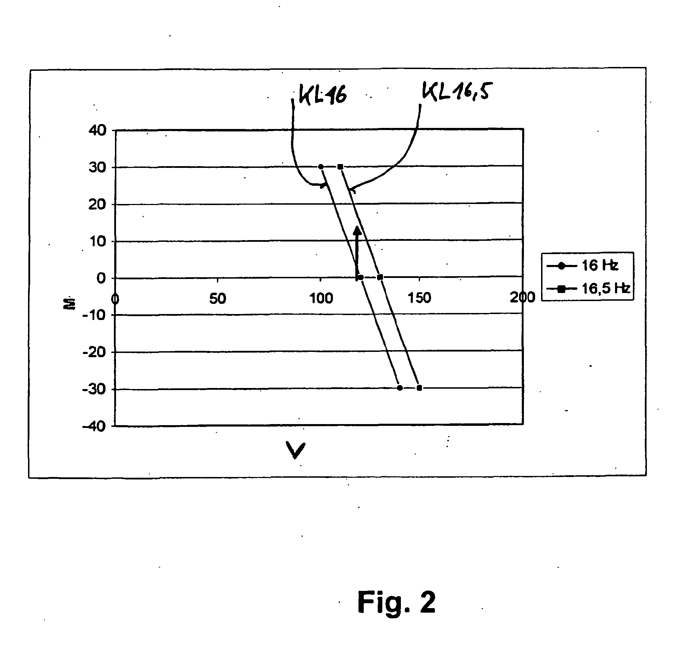

In Figur 2 ist die Kennlinie KL16 der in der hier beschriebenen Ausführungsform verwendeten Asynchronmotoren gezeigt, wobei die Motoren über den gemeinsamen Frequenzumrichter mit einer Frequenz von 16 Hz betrieben werden. Dabei ist auf der linken Vertikalachse das Moment M und auf der unten liegenden horizontalen Achse die Oberflächengeschwindigkeit V wiedergegeben. Die von den Asynchronmotoren angetriebenen Walzen weisen hier und im Folgenden den gleichen Durchmesser auf, so dass alle Vorheizwalzen die gleiche Oberflächengeschwindigkeit aufweisen, wenn Sie mit gleicher Drehzahl drehen. Die Verwendung von Vorheizwalzen mit gleichem Durchmesser ist jedoch keine Voraussetzung der Erfindung. Insbesondere ist es auch möglich, dass Walzen mit unterschiedlichen Durchmessern verwendet werden, wobei die Kennlinien der einzelnen Asynchronmotoren dann derart eingestellt werden, dass der Nullpunkt der Kennlinie aller Asynchronmotoren bei der gleichen Oberflächengeschwindigkeit liegt. In Figur 2 ist die Abhängigkeit des durch einen Asynchronmotor aufgebrachten Moments (in Nm) von der Oberflächengeschwindigkeit der durch den Asynchronmotor gesteuerten Vorheizwalze (in Umdrehungen pro Minute) dargestellt. Es ist ersichtlich, dass der Nullpunkt der Kennlinie bei ca. 120 Umdrehungen pro Minute liegt. Bei dieser Drehzahl der Vorheizwalze bringt der Asynchronmotor kein Drehmoment auf. Bei Verkleinerung der Drehzahl wird entsprechend der Kennlinie ein positives Moment erzeugt, wohingegen bei Vergrößerung der Drehzahl ein negatives Moment aufgebracht wird.

In Figur 2 ist von der 16 Hz Kennlinie KL16 nach rechts verschoben noch eine zweite Kennlinie KL16,5 eingezeichnet, die einer Antriebsfrequenz von 16,5 Hz entspricht. Insbesondere dann, wenn die Geschwindigkeit der anzutreibenden Folie nicht veränderbar ist und gleichwohl ein entsprechendes Drehmoment auf die Folie zum Ausgleich der Reibung übertragen werden soll kann die Frequenz entsprechend erhöht werden, um beispielsweise ein höheres Drehmoment aufzubringen. Bei einer Erhöhung der Frequenz von 16 Hz auf 16,5 Hz wird beispielsweise entsprechend der Pfeildarstellung eine Momentenerhöhung um 15 Nm bewirkt.

Durch die Erwärmung der Folie treten bei den Vorheizwalzen am Ende der Vorheizzone Längenänderungen auf, was dazu führt, dass die Walzen am Ende der Vorheizzone schneller drehen. Gemäß der in Figur 2 gezeigten Kennlinie werden dann die letzten Walzen weniger Moment aufbringen als die ersten Walzen. Hierdurch werden die Verluste im Gesamtsystem gering gehalten und es wird ein gleichmäßiges Abrollen der Folie über die Vorheizwalzen gewährleistet. Ferner ist der Einfluss der Längung der Folie auf die Zugverteilung sehr gering. Gemäß der Kennlinie der Figur 2 bewirkt beispielsweise eine Geschwindigkeitserhöhung der Walzen um 5% eine Momentänderung von nur ca. 7,5 Nm, also ca. 25% des Nennmomentes des Motors.

Die Differenz aus dem Motormoment und der Reibkraft bestimmt das "freie Moment", das über die Folie aufgenommen wird. Ein positives "freies Moment" bewirkt, dass die Folienkraft (= Spannung in der Folie) vor der Walze größer als die Folienkraft hinter der Walze ist. Das "freie Moment" bestimmt also die Kraftänderung in der Folie über eine Walze. Die absolute Höhe des Momentes ist nur durch die Einlaufwalze und die Auslaufwalze definiert.

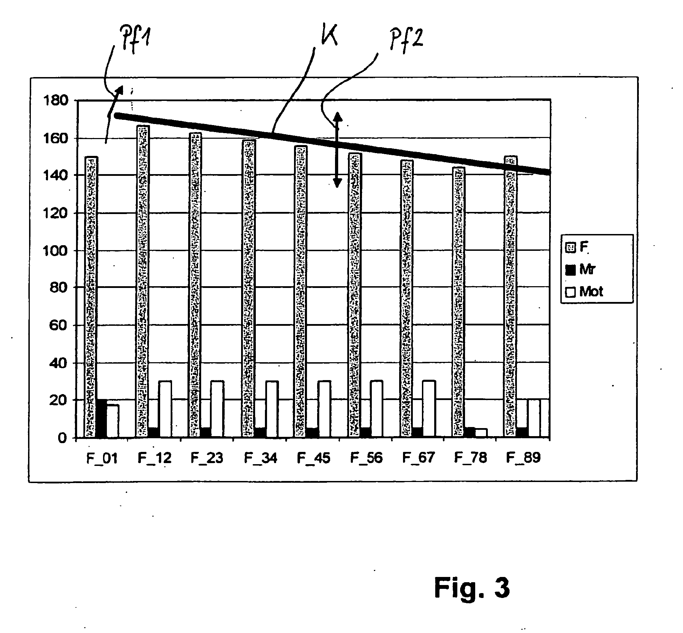

In Figur 3 sind für eine Vorheizwalzenanordnung H₁, welche im Gegensatz zu den Ausführungsbeispielen nach Figur 1 nicht sechs sondern insgesamt neun Walzen umfasst, die in der Walzenanordnung wirkenden Kräfte dargestellt. Die einzelnen Walzen sind von 1 bis 9 durchnummeriert. Dabei nimmt Figur 3 Bezug auf die in Figur 1 einzeln dargestellten Walzen, die in Figur 1 ebenfalls von 1 bis 9 durchnummeriert sind, wobei die Walzenziffer 1 die Eingangswalze und die Walzenziffer 9 die Ausgangswalze der Vorheizwalzenanordnung H₁ darstellt. Die Eingangswalze und die Ausgangswalze werden jeweils mit einem Direktantrieb angetrieben. Dabei wird die Rotationsgeschwindigkeit der Ausgangswalze entsprechend der Länge der Länge des Kunststofffilms in der Vorheizstufe H₁ auf eine höhere Rotationsgeschwindigkeit eingestellt oder geregelt als die Rotationsgeschwindigkeit der Eingangswalze 0. Die zwischen der Eingangs- und der Ausgangswalze liegenden Walzen 1 bis 8 werden mit Asynchronmotoren angetrieben.

In jeder dieser Positionen in Figur 3 sind jeweils drei Balken dargestellt, welche folgende Bedeutung haben:
- Der rechte Balken stellt jeweils die Motorantriebskraft (Mot) der jeweiligen Walze 1, 2 ... bis 9 dar;
- der mittlere Balken zeigt jeweils die Reibungskräfte (Mr) der jeweiligen Walze 1, 2, ... bis 9; und
- der linke Balken stellt jeweils die Kraft (F) dar, die auf die Folie zwischen zwei Walzen wirkt.

Die Stelle F_23 gibt also mit dem rechten Balken die Motorantriebskraft der Walze 3 und mit dem mittleren Balken die Reibungskraft wieder, die an der Walze 3 auftritt und durch den Asynchronmotor mit überwunden werden soll. Der linke Balken zeigt dabei die Folienkraft an, die auf die Folie zwischen der zweiten und dritten Walze wirkt. Mit anderen Worten sind also auf der Abszisse in Figur 3 jeweils die an den einzelnen Vorheizwalzen 1 bis 9 wirkenden Motorantriebskräfte sowie die auftretenden Reibungskräfte bzw. die zwischen Walze 1 und 2, Walze 2 und 3 usw. bis die zwischen Walze 8 und 9 wirkende Folienkräfte F_12, F_23, F_45,F_67 bis F_89 dargestellt. Die an der ersten Walze der Vorheizstufe H₁ auftretende Folienkraft wirkt zwischen dieser Walze 1 und einer der Eingangswalze 1 vorausgehenden Walze, weshalb in Figur 3 diese Kraft mit F_01 bezeichnet ist.

Dabei zeigt in Figur 3 der Pfeil Pf1 die Änderung der Frequenz für die Walzen 2 bis 7 (bzw. 8) und der Pfeil Pf2 die Änderung der Friktion der Walze 8 zur Walze 1 (bzw. 2).

Wie sich aus der Kennlinie K des Diagramms der Figur 3 ergibt, sinkt die Folienkraft zwischen Walze 2 und der letzten intermediären Walze 8 ab, da jeweils die Motorkraft über der Reibkraft liegt, also jeweils das "freie Moment" größer O ist, also jede der Walzen eine höhere Kraft vor der Walze als hinter der Walze verlangt.

Da das Motormoment entsprechend Figur 2 direkt durch die Umrichterfrequenz beeinflusst wird, kann die Kraftverteilung in der Walzenanordnung durch die Umrichterfrequenz definiert werden. Der Mittelwert der Kraft zwischen Walze 1 und Walze 9 wird weiterhin durch das Geschwindigkeitsverhältnis der Walze 9 zur Walze 1 definiert.

Das Ausführungsbeispiel ist für den Fall erläutert worden, dass für die Vorheiz- oder Heizstufe H₁ sowohl die Eingangs- wie die Ausgangswalzen 1, 9 über einen separaten Einzel- oder Direktantrieb angetrieben werden, wobei die dazwischen liegenden Walzen dann bevorzugt über eine Art Synchronmotor in der geschilderten Weisen zum Gesamtantrieb beitragen. In einer vereinfachten Ausführungsform könnte demgegenüber nur der Ausgangswalze 9 ein Einzel- oder Direktantrieb zugeordnet werden. Bevorzugt ist jedoch die Ausführungsform, bei der neben der Ausgangswalze auch der Eingangswalze 1 ein Einzel- oder Direktantrieb zugeordnet wird, um dadurch die Rotationsgeschwindigkeit an der Eingangswalze 1 sowie an der Ausgangswalze 9 entsprechend unterschiedlich einzustellen.

Das Ausführungsbeispiel ist für den Fall erläutert worden, dass die Heiz- oder Vorheizstufe H₁ mit den Walzen 1 bis 9 einer Kühlwalze nachgeordnet ist. Grundsätzlich wäre auch eine Ausführungsform denkbar, bei der als Einzelwalze die Kühlwalze verwendet wird, auf die ein Kunststofffilm von einer Schlitzdüse kommend zum Kühlen übergeben wird. In diesem Fall würde die Kühlwalze ebenfalls über einen Einzel- oder Direktantrieb verfügen.

## Patentansprüche

1. Vorrichtung zum Antrieb einer Vorheizwalzenanordnung in einer Heiz- oder Vorheizstufe (H₁) einer Anlage und insbesondere einer Reckanlage zur Herstellung von Folien, wobei die Heiz- oder Vorheizstufe (H₁) mehrere Walzen (1, ..., 9) mit einer Eingangswalze (1), einer Ausgangswalze (9) sowie mehreren zwischen der Eingangs- und der Ausgangswalze (1, 9) angeordneten intermediären Walzen (2, ..., 8) umfasst und wobei die Vorrichtung eine elektrische Motoranordnung aufweist, mit der die Walzen (1, ..., 9) angetrieben werden,
**gekennzeichnet durch** folgende Merkmale:
- die Motoranordnung umfasst wenigstens einen Einzelantrieb zum Antrieb der Ausgangswalze (9) oder einen Einzelantrieb zum Antrieb der Eingangswalze und einen weiteren Einzelantrieb zum Antrieb der Ausgangswalze (1, 9),
- die Motoranordnung umfasst ferner für die intermediären Walzen (2, ..., 8) einen oder mehrere Asynchronmotoren zur Steuerung der Oberflächengeschwindigkeit und des Drehmoments zumindest einer der intermediären Walzen, und
- es ist ein gemeinsamer Frequenzumrichter zum Betrieb eines oder mehrerer Asynchronmotoren vorgesehen.

2. Vorrichtung nach Anspruch 1, **dadurch gekennzeichnet, dass** die Frequenz des Frequenzumrichters derart eingestellt ist, dass für ein vorgegebenes Temperaturprofil der Vorheizwalzenanordnung und eine erwünschte Transportgeschwindigkeit der Folie die Reibung der Walzen (1,..., 9) und die Längung der Folie in der Vorheizwalzenanordnung ausgeglichen werden.

3. Vorrichtung nach Anspruch 1 oder 2, **dadurch gekennzeichnet, dass** die Motoranordnung für die Eingangs- und Ausgangswalze (1, 9) jeweils einen Einzelantrieb, vorzugsweise in Form eines Direktantriebes aufweist.

4. Vorrichtung nach einem der vorhergehenden Ansprüche, **dadurch gekennzeichnet, dass** die Asynchronmotoren zumindest teilweise als Torquemotoren mit einer Hohlwelle ausgebildet sind.

5. Vorrichtung nach Anspruch 4, **dadurch gekennzeichnet, dass** die Torquemotoren jeweils direkt auf der Welle einer intermediären Walze montiert sind.

6. Vorrichtung nach einem der vorhergehenden Ansprüche, **dadurch gekennzeichnet, dass** die Asynchronmotoren zumindest teilweise IEC-Normmotoren sind.

7. Vorrichtung nach Anspruch 6, **dadurch gekennzeichnet, dass** die IEC-Normmotoren jeweils über einen Flansch und/oder eine Konsole auf der Welle einer intermediären Walze montiert sind.

8. Vorrichtung nach einem der vorhergehenden Ansprüchen, **dadurch gekennzeichnet, dass** die Ausgangswalze (6) im Betrieb auf eine höhere Oberflächengeschwindigkeit einstellbar ist als die Eingangswalze (1).

9. Vorrichtung nach einem der Ansprüche 1 bis 8, **dadurch gekennzeichnet, dass** die Eingangswalze (1) aus einer Kühlwalze besteht.

10. Vorheizwalzenanordnung umfassend eine Eingangswalze (1), eine Ausgangswalze (6) sowie eine oder mehrere zwischen Eingangs- und Ausgangswalze (1, 6) angeordnete intermediäre Walzen (2, 3, 4, 5), **dadurch gekennzeichnet, dass** die Vorheizwalzenanordnung eine Antriebsvorrichtung nach einem der vorhergehenden Ansprüche umfasst.

11. Anlage zur Herstellung von Folien, insbesondere von Kunststofffolien, **dadurch gekennzeichnet, dass** die Anlage eine Vorheizwalzenanordnung mit einer Antriebsvorrichtung nach einem der Ansprüche 1 bis 9 umfasst.

12. Verfahren zum Antrieb einer Vorheizwalzenanordnung in einer Heiz- oder Vorheizstufe (H₁) einer Anlage und insbesondere einer Reckanlage zur Herstellung von Folien, wobei innerhalb der Heiz- oder Vorheizstufe (H₁) mehrere Walzen (1, ..., 9) umfassend eine Eingangswalze (1), eine Ausgangswalze (9) sowie mehrere zwischen der Eingangs- und der Ausgangswalze (1, 9) angeordnete intermediäre Walzen (2, ..., 8) angetrieben werden, **gekennzeichnet durch** die folgenden Merkmale:
- mittels einer Motoranordnung in Form eines Einzelantriebes wird die Ausgangswalze (9) angetrieben oder mittels der Motoranordnung in Form eines ersten Einzelantriebes wird die Ausgangswalze (9) und über einen weiteren Einzelantrieb die Eingangswalze (1) angetrieben,
- für die Motoranordnungen zum Antrieb der intermediären Walzen (2, ..., 8) werden Asynchronmotoren verwendet, wobei mittels zumindest eines Asynchronmotors die Oberflächengeschwindigkeit und das Drehmoment zumindest einer der intermediären Walzen (2, ..., 8) gesteuert wird, und
- es wird ein gemeinsamer Frequenzumrichter verwendet, mit dem ein oder mehr als ein Asynchronmotor, insbesondere alle Asynchronmotoren angesteuert und/oder betrieben werden.

13. Verfahren nach Anspruch 12, **dadurch gekennzeichnet, dass** die Frequenz des Frequenzumrichters derart eingestellt wird, dass für ein vorgegebenes Temperaturprofil der Vorheizwalzenanordnung und eine erwünschte Transportgeschwindigkeit der Folie die Reibung der Walzen (1, ..., 9) und die Längung der Folien der Vorheizwalzenanordnung ausgeglichen werden.

14. Verfahren nach Anspruch 12 oder 13, **dadurch gekennzeichnet, dass** die Ausgangswalze (6) im Betrieb auf eine höhere Oberflächengeschwindigkeit eingestellt wird als die Eingangswalze (1).

## Claims

1. A device for driving a preheating roll assembly in a heating or preheating stage (H₁) of a unit and in particular a stretching unit for producing films, the heating or preheating stages (H₁) comprising a plurality of rolls (1, ..., 9) with an entry roll (1), an exit roll (9) and a plurality of intermediate rolls (2, ..., 8) arranged between the entry and exit rolls (1, 9) and the device comprising an electrical motor assembly with which the rolls (1, ..., 9) are driven, **characterized by** the following features:
- the motor assembly comprises at least one individual drive for driving the exit roll (9) or one individual drive for driving the entry roll and a further individual drive for driving the exit rolls (1, 9),
- the motor assembly also comprises one or more asynchronous motor(s) for the intermediate rolls (2, ..., 8) to control the surface speed and the torque of at least one of the intermediate rolls, and
- a common frequency converter for operating one or a plurality of asynchronous motors is provided.

2. The device as claimed in Claim 1, **characterized in that** the frequency of the frequency converter is adjusted such that for a predefined temperature profile of the preheating roll assembly and a desired conveying speed of the film the friction of the rolls (1, ..., 9) and the elongation of the film are compensated in the preheating assembly.

3. The device as claimed in Claim 1 or 2, **characterized in that** the motor assembly for the entry and exit rolls (1, 9) comprises one individual drive respectively, preferably in the form of a direct drive.

4. The device as claimed in any one of the preceding claims, **characterized in that** the asynchronous motors are at least partially designed as torque motors with a hollow shaft.

5. The device as claimed in Claim 4, **characterized in that** the torque motors are each directly assembled on the shaft of an intermediate roll.

6. The device as claimed in any one of the preceding claims, **characterized in that** the asynchronous motors are at least partially IEC standard motors.

7. The device as claimed in Claim 6, **characterized in that** the IEC standard motors are each assembled via a flange and/or a bracket on the shaft of an intermediate roll.

8. The device as claimed in any one of the preceding claims, **characterized in that** during operation the exit roll (6) can be set to a higher surface speed than the entry roll (1).

9. The device as claimed in any one of Claims 1 to 8, **characterized in that** the entry roll (1) consists of a chilling roll.

10. A preheating roll assembly, comprising an entry roll (1), an exit roll (6) and one or more intermediate roll(s) (2, 3, 4, 5) arranged between entry roll and exit roll (1, 6), **characterized in that** the preheating roll assembly comprises a drive device as claimed in any one of the preceding claims.

11. A unit for producing films, in particular plastics films, **characterized in that** the unit comprises a preheating roll assembly with a drive device as claimed in any one of Claims 1 to 9.

12. A method for driving a preheating roll assembly in a heating or preheating stage (H₁) of a unit and in particular a stretching unit for producing films, wherein within the heating or preheating stage (H₁) a plurality of rolls (1, ..., 9) comprising an entry roll (1), an exit roll (9) and a plurality of intermediate rolls (2, ..., 8),arranged between the entry rolls and the exit rolls (1, 9), are driven, **characterized by** the following features:
- the exit roll (9) is driven by means of a motor assembly in the form of an individual drive or the exit roll (9) is driven by means of the motor assembly in the form of a first individual drive and the entry roll (1) is driven by means of a further individual drive,
- asynchronous motors are used for the motor assemblies to drive the intermediate rolls (2, ..., 8), the surface speed and the torque of at least one of the intermediate rolls (2, ..., 8) being controlled by means of at least one asynchronous motor, and
- a common frequency converter is used with which one or more than one asynchronous motor, in particular all asynchronous motors, is/are controlled and/or operated.

13. The method as claimed in Claim 12, **characterized in that** the frequency of the frequency converter is adjusted such that for a predefined temperature profile of the preheating roll assembly and a desired conveying speed of the film the friction of the rolls (1, ..., 9) and the elongation of the films of the preheating roll assembly are compensated.

14. The method as claimed in Claim 12 or 13, **characterized in that** during operation the exit roll (6) is set to a higher surface speed than the entry roll (1).

## Revendications

1. Dispositif pour entraîner un agencement à cylindre de préchauffage dans un étage de chauffage ou de préchauffage (H₁) d'une installation, et en particulier d'une installation d'étirage pour la fabrication de films, dans lequel l'étage de chauffage ou de préchauffage (H₁) comprend plusieurs cylindres (1, ..., 9) avec un cylindre d'entrée (1), un cylindre de sortie (9) et plusieurs cylindres intermédiaires (2, ..., 8) agencés entre le cylindre d'entrée et le cylindre de sortie (1, 9), le dispositif comprenant un agencement moteur électrique au moyen duquel les cylindres (1, ..., 9) sont entraînés,
**caractérisé par** les caractéristiques suivantes:
- l'agencement moteur comprend au moins un entraînement individuel pour l'entraînement du cylindre de sortie (9), ou un entraînement individuel pour l'entraînement du cylindre d'entrée et un autre entraînement individuel pour l'entraînement du cylindre de sortie (1, 9),
- l'agencement moteur comprend en outre un ou plusieurs moteurs asynchrones pour les cylindres intermédiaires (2, ..., 8) afin de commander la vitesse de surface et le couple de rotation de l'un au moins des cylindres intermédiaires, et il est prévu un convertisseur de fréquence commun pour la commande d'un ou plusieurs moteurs asynchrones.

2. Dispositif selon la revendication 1, **caractérisé en ce que** la fréquence du convertisseur de fréquence est établie de telle façon que la friction des cylindres (1, ..., 9) et l'allongement du film dans l'agencement à cylindre de préchauffage sont compensés pour un profil de température prédéterminé de l'agencement à cylindre de préchauffage et pour une vitesse de transport désirée du film.

3. Dispositif selon la revendication 1 ou 2, **caractérisé en ce que** l'agencement moteur comprend pour le cylindre d'entrée et pour le cylindre de sortie (1, 9) un entraînement individuel respectif, de préférence sous la forme d'un entraînement direct.

4. Dispositif selon l'une des revendications précédentes, **caractérisé en ce que** les moteurs asynchrones sont réalisés au moins partiellement sous forme de moteurs-couples avec un arbre creux.

5. Dispositif selon la revendication 4, **caractérisé en ce que** les moteurs-couples sont montés respectivement directement sur l'arbre d'un cylindre intermédiaire.

6. Dispositif selon l'une des revendications précédentes, **caractérisé en ce que** les moteurs asynchrones sont au moins partiellement des moteurs aux normes IEC.

7. Dispositif selon la revendication 6, **caractérisé en ce que** les moteurs aux normes IEC sont montés respectivement via une bride et/ou une console sur l'arbre d'un cylindre intermédiaire.

8. Dispositif selon l'une des revendications précédentes, **caractérisé en ce que** le cylindre de sortie (6) peut être réglé en service à une vitesse de surface supérieure au cylindre d'entrée (1).

9. Dispositif selon l'une des revendications 1 à 8, **caractérisé en ce que** le cylindre d'entrée (1) est un cylindre de refroidissement.

10. Agencement à cylindre de préchauffage comprenant un cylindre d'entrée (1), un cylindre de sortie (6), et un ou plusieurs cylindres intermédiaires (2, 3, 4, 5) agencés entre le cylindre d'entrée et le cylindre de sortie (1, 6), **caractérisé en ce que** l'agencement à cylindre de préchauffage comprend un dispositif d'entraînement selon l'une des revendications précédentes.

11. Installation pour la fabrication de films, en particulier de films en matière plastique, **caractérisée en ce que** l'installation comprend un agencement à cylindre de préchauffage avec un dispositif d'entraînement selon l'une des revendications 1 à 9.

12. Procédé pour l'entraînement d'un agencement à cylindre de préchauffage dans un étage de chauffage ou de préchauffage (H₁) d'une installation, et en particulier d'une installation d'étirage pour la fabrication de films, dans lequel, à l'intérieur de l'étage de chauffage ou de préchauffage (H₁), plusieurs cylindres (1, ..., 9), comprenant un cylindre d'entrée (1), un cylindre de sortie (9) et plusieurs cylindres intermédiaires (2, ..., 8) agencés entre le cylindre d'entrée et le cylindre de sortie (1, 9), sont entraînés,
**caractérisé par** les caractéristiques suivantes :
- au moyen d'un agencement moteur sous la forme d'un entraînement individuel on entraîne le cylindre de sortie (9), ou bien au moyen de l'agencement moteur sous la forme d'un premier entraînement individuel on entraîne le cylindre de sortie (9) et on entraîne le cylindre d'entrée (1) via un autre entraînement individuel,
- pour les agencements moteurs destinés à l'entraînement des cylindres intermédiaires (2, ..., 8) on utilise des moteurs asynchrones, et l'on commande la vitesse de surface et le couple de rotation de l'un au moins des cylindres intermédiaires (2, ..., 8) au moyen d'un moteur asynchrone, et
- on utilise un convertisseur de fréquence commun au moyen duquel on pilote et/ou on fait fonctionner un moteur asynchrone ou plus d'un moteur asynchrone, en particulier tous les moteurs asynchrones.

13. Procédé selon la revendication 12, **caractérisé en ce que** la fréquence du convertisseur de fréquence est établie de telle façon que la friction des cylindres (1, ..., 9) et l'allongement du film dans l'agencement à cylindre de préchauffage sont compensés pour un profil de température prédéterminé de l'agencement à cylindre de préchauffage et pour une vitesse de transport désirée du film.

14. Procédé selon la revendication 12 ou 13, **caractérisé en ce que** le cylindre de sortie (6) est réglé en service à une vitesse de surface supérieure au cylindre d'entrée (1).
